# EUROPÄISCHE PATENTANMELDUNG

(11) **EP 0 534 200 A1**
(43) Veröffentlichungstag der Anmeldung: **31.03.1993**
(21) Anmeldenummer: 92115149.4
(22) Anmeldetag: 04.09.1992
(51) Int. Cl.: C01B 35/10, B01J 29/04, B01J 20/18

(54) **Verfahren zur Herstellung von im wesentlichen alkalifreien Borsilikat-Kristallen mit Zeolithstruktur**

(30) Priorität: 21.09.1991 DE 4131448
(71) Anmelder: BASF Aktiengesellschaft, D-67063 Ludwigshafen (DE)
(72) Erfinder: Mueller, Ulrich, Dr., W-6730 Neustadt (DE); Hoelderich, Wolfgang, Dr., W-6710 Frankenthal (DE)

(57) **Zusammenfassung**

Verfahren zur Herstellung von im Wesentlichen alkalifreien Borsilikat-Kristallen mit Zeolithstruktur und einer über die Kristallit-Längsachse gemessenen Größe zwischen 2 und 150 µm, indem man eine SiO₂-haltige Mischung aus Wasser, einer Tetraalkylammoniumverbindung, einer Borkomponenten und Ammoniak in Abwesenheit eines Metallhydroxids oder eines Metallsalzes bei einem molaren Verhältnis von Ammoniak/Tetraalkylammonium von 3:1 bis 150:1 hydrothermal umsetzt.

## Beschreibung

Die vorliegende Erfindung betrifft ein neues und verbessertes Verfahren zur Herstellung von im Wesentlichen alkalifreien Borsilikat-Kristallen mit Zeolithstruktur in Abwesenheit eines Metallhydroxids oder eines Metallsalzes unter hydrothermalen Bedingungen.

Bei der Herstellung kristalliner Borsilikate ist bekannt, daß man z.B. wässrige alkalische Mischungen aus einer Silicaquelle, einer Boroxidquelle, Natriumoxid und einer organischen Schablonenverbindung wie beispielsweise Tetra-n-propylammoniumsalzen hydrothermal unter autogenem Druck umzusetzen. Solche Verfahren werden beispielsweise in der EP-A-68 796 beschrieben. Die Verwendung von Piperidin oder Hexamethylenimin als organische Schablonenverbindung wird in EP-A-293 032 beschrieben und in DE-A-28 30 787, bzw. in EP-A-7081 ist gezeigt, daß man in einer alkalifreien Synthesemischung mit Hexamethylendiamin ebenfalls Borsilikatzeolithe erhält. Die Verwendung von Hexamethylendiamin und Borsilikatglas als Ausgangskomponenten lehrt die DE-A-29 09 929. Die Verwendung von Ethylendiamin und Natriumhydroxid zur Synthese ist in der GB-A-2,024,790 beschrieben. Die Synthese von Borsilikatzeolithen (ZBH) in etherischen oder wässrig etherischem Medium in Gegenwart von Alkalisalzen ist aus der EP-A-77 946 bekannt. Die Kristallisation aus fluoridhaltigen Synthesemischungen ist aus der EP-A-224 531 bekannt.

Im Hinblick auf die Herstellung von Borsilikatzeolithen mit großen Kristallgrößen beschreiben J.C. Jansen, E. Biron und H. van Bekkum (Innovation in Zeolite Materials Science, Grobet, Mortier, Vansant und Schulz-Ekloff (Eds.), Elsevier (Amsterdam) 1988, S. 133-141) eine Methode, die von einem alkalihaltigen System ausgeht und mit Tetrapropylammonium/SiO₂ = 3,3:1 bis 10:1 hohe Konzentrationen von Tetrapropylammonium verlangt.

Bei den so hergestellten Proben aus alkalihaltigen Syntheseverfahren müssen die hergestellten Borsilikatzeolithe durch eine Temperaturbehandlung von den aminhaltigen Schablonenverbindungen befreit werden. Danach muß beispielsweise durch einen Ionenaustausch und eine zweite Temperaturbehandlung daraus die katalytisch aktive H-Form hergestellt werden. Dieser Weg erfordert allerdings einen erhöhten Arbeitsaufwand.

Bei dem alkalifreien Herstellverfahren nach EP-A-7 081 kann zwar der Ionenaustausch zur Überführung in die H-Form entfallen, aber eine Herstellung von Borsilikatzeolithen mit einer Kristallgröße deutlich größer als 2 um ist danach, ebenso wie nach US-A-4 285 919 nicht möglich. Zur Anwendung in katalytischen Verfahren muß feinteiliges Zeolithpulver dann in einem arbeitsaufwendigen Formgebungsschritt zu Katalysatorsträngen verarbeitet werden, um in einem katalytischen Prozeß eingesetzt werden zu können.

Der vorliegenden Erfindung lag daher die Aufgabe zugrunde, den zuvor genannten Nachteilen abzuhelfen.

Demgemäß wurde ein neues und verbessertes Verfahren zur Herstellung von im Wesentlichen alkalifreien Borsilikat-Kristallen mit Zeolithstruktur und einer über die Kristallit-Längsachse gemessenen Größe zwischen 2 und 150 um gefunden, welches dadurch gekennzeichnet ist, daß man eine SiO₂-haltige Mischung aus Wasser, einer Tetraalkylammoniumverbindung, einer Borkomponenten und Ammoniak in Abwesenheit eines Metallhydroxids oder eines Metallsalzes bei einem molaren Verhältnis von Ammoniak/Tetraalkylammonium von 3:1 bis 150:1 hydrothermal umsetzt.

Das erfindungsgemäße Verfahren bietet die Möglichkeit durch die Verwendung z.B. einer aus Tetrapropylammoniumsalzen und Tetrapropylammoniumhydroxid zusammengesetzten Templatmischung die Größe der entstehenden Kristalle und deren Größenverteilung in einfacher Weise durch die Zusammensetzung der Reaktionsmischung zu beeinflussen und benötigt dabei nur geringe Mengen an Tetraalkylammonium von Tetraalkylammonium/SiO₂ = 0,042:1 bis 0,2:1, vorzugsweise von 0,042:1 bis 0,15:1.

Insbesondere ist es möglich, daß die entstehenden Borsilikat-Zeolithe zum überwiegenden Teil in Form einheitlich großer Partikel, die ohne Agglomeration anfallen, zu erhalten, wenn man als molare Verhältnisse der Reaktionsmischung im Bereich von SiO₂/B₂O₃ mit 10:1 bis 1500:1, bevorzugt von 10 bis 250, besonders bevorzugt von 10 bis 100 arbeitet und/oder dabei eine Verdünnung von SiO₂/H₂O mit 0,07:1 bis 0,025:1, bevorzugt von 0,05:1 bis 0,04:1 einhält.

Das erfindungsgemäße alkalifreie Verfahren macht es möglich, daß darüberhinaus das Material nach einer Temperaturbehandlung bei 350 bis 600°C, bevorzugt bei 400 bis 550°C und besonders bevorzugt bei 450 bis 500°C direkt und ohne zusätzlichen Ionenaustausch und insbesondere aufgrund der Kristallgröße von mehr als 2 µm, d.h. 2 bis 150 µm, bevorzugt 3 bis 120 µm, besonders bevorzugt 5 bis 80 µm ohne weitere Formgebung in einer wirksamen H-Form vorliegt und als Katalysator verwendet werden kann.

Der nach dem beschriebenen Verfahren hergestellte Borsilikatzeolith kann eingesetzt werden zur katalytischen Umwandlung organischer Moleküle, beispielsweise für katalytische Alkylierungen, Isomerisierungen, Umlagerungen, Disproportionierungen, Acylierungen, Cyclisierungen, Hydratisierungen und Dehydratisierungen, Aminierungen, Hydrierungen und Dehydrierungen, Dehydrocyclisierungen, Hydroxylierungen, Epoxydierungen, sowie zu Kombinationen dieser Reaktionen. Die erfindungsgemäß hergestellten Borsilikatzeolithe können darüberhinaus die Umwandlung von Methanol zu einem Gemisch von C₂- bis C₄-Olefinen katalysieren. Umsetzungen dieser Art sind beispielsweise in W. Hölderich et al., "Aluminosilicate and Borosilicate Zeolithes and their use in the conversion of methanol to olefins" in D. Olson and A. Bisio (eds.) Proceedings of 6th YZC, Reno, Nev. USA, 1983, Butterworths, 1984, S. 545-555 beschrieben oder auch in W.Hölderich, "Zeolites: Catalysts for the synthesis of organic compounds", Elsevier, Studies Surf. Sci. Catal., Vol. 49, Amsterdam (1989), S. 69 bis 93.

Die besondere Porenstruktur des Materials und die einfache Herstellung ermöglichen es, daß die erfindungsgemäß hergestellten Borsilikatzeolithe als mikroporöse Adsorbentien, beispielsweise zur Abtrennung organischer Moleküle oder ihrer Isomeren in flüssiger oder gasförmiger Phase eingesetzt werden können.

Die nachfolgenden Beispiele sollen das erfindungsgemäße Herstellverfahren näher erläutern.

### Beispiel 1

Dieses Beispiel erläutert die Synthese einheitlich großer Kristalle bei langer Kristallisationszeit.

In einem Stahlautoklaven mit Rührvorrichtung wurden 2,22 kg Tetrapropylammoniumbromid, 7,96 kg Kieselsol LUDOX® AS-40 (Du Pont), 8,9 kg deionisiertes Wasser und 386 g Borsäuretrimethylester vorgelegt. Zu dieser Suspension wurden 7,2 kg einer wässrigen Ammoniaklösung (25 Gew.-%) zugegeben. Die entstandene Suspension wurde im verschlossenen Autoklaven unter Rühren (100 U/min) auf 185°C hochgeheizt und im Laufe von 168 Stunden zur Kristallisation gebracht. Nach dem Abkühlen wurde der Feststoff abfiltriert, neutralgewaschen, bei 120°C getrocknet und abschließend bei 500°C temperaturbehandelt.

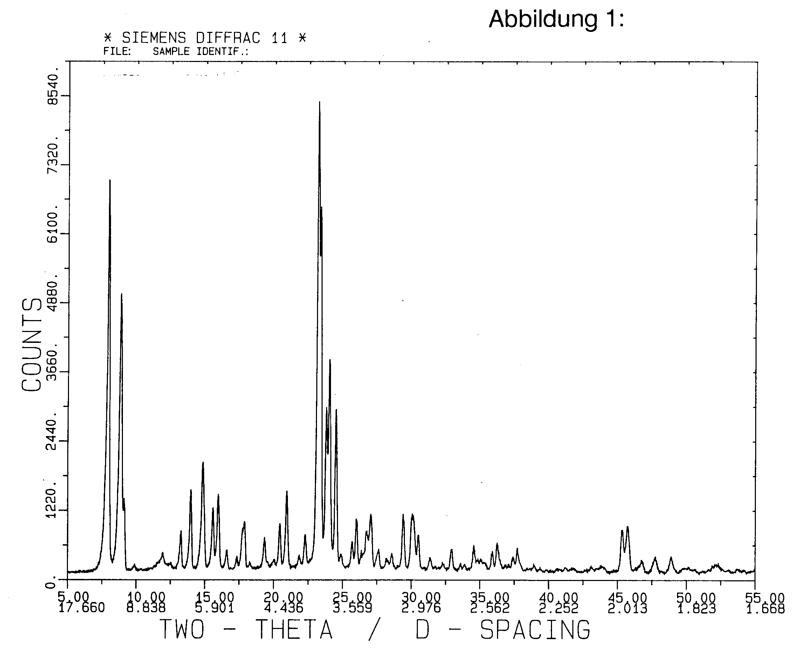

Die Ausbeute an Borsilikatzeolith bezogen auf eingesetztes SiO₂ betrug 97 %. Die chemische Analyse des Produktes ergab eine Zusammensetzung von 96,5 Gew.-% SiO₂, 1,48 Gew.-% B₂O₃ und Spuren von 140 ppm Natrium, sowie 90 ppm Al₂O₃. Das Produkt war vollkristallin und zeigte das in Abbildung 1 angegebene Pulverdiffraktogramm.

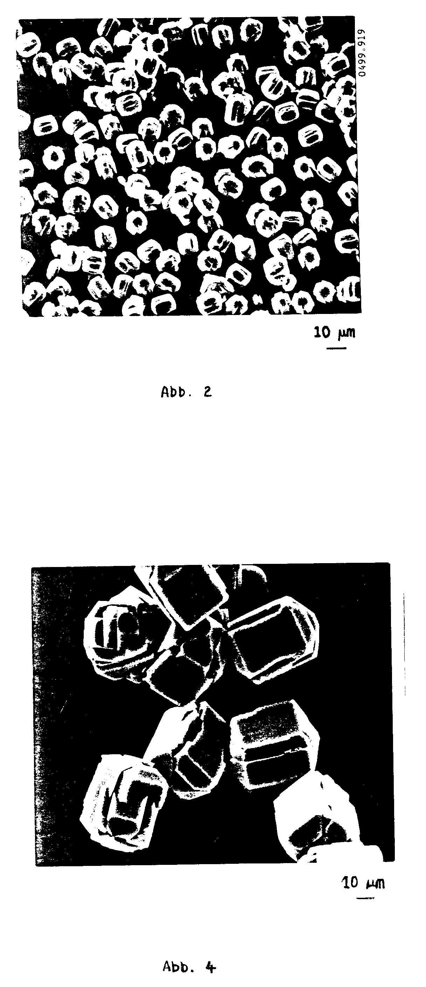

Die Kristalle hatten eine mittlere Größe von 12 µm. Die enge Größenverteilung kann anhand von Abbildung 2 entnommen werden.

### Beispiel 2

Dieses Beispiel erläutert die Synthese einheitlich großer Kristalle bei langer Kristallisationszeit in einem statischen Experiment.

In einem teflonausgekleideten Stahlautoklaven wurden 6,9 g Tetrapropylammoniumbromid, 75,3 g Kieselsol LUDOX AS-408R8 (Du Pont), 83,1 g deionisiertes Wasser und 3,66 g Borsäuretrimethylester vorgelegt. Zu dieser Suspension wurden 68,8 g einer wässrigen Ammoniaklösung (25 Gew.-%) zugegeben.

Die entstandene Suspension wurde homogenisiert, im verschlossenen Autoklaven auf 185°C hochgeheizt und im Laufe von 168 Stunden zur Kristallisation gebracht. Nach dem Abkühlen wurde der Feststoff abfiltriert, neutralgewaschen, bei 120°C getrocknet und abschließend bei 500°C temperaturbehandelt.

Die Ausbeute an Borsilikatzeolith bezogen auf eingesetztes SiO₂ betrug 98 %.

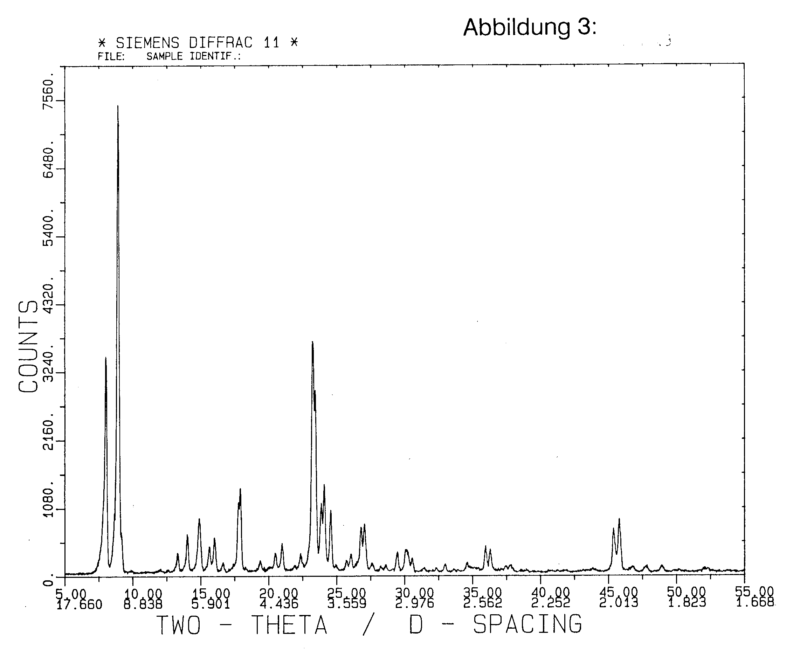

Die chemische Analyse des Produktes ergab eine Zusammensetzung von 97,6 Gew.-% SiO₂, 1,7 Gew.-% B₂O₃ und Spuren von 120 ppm Natrium. Das Produkt war vollkristallin und zeigte das in Abbildung 3 angegebene Pulverdiffraktogramm.

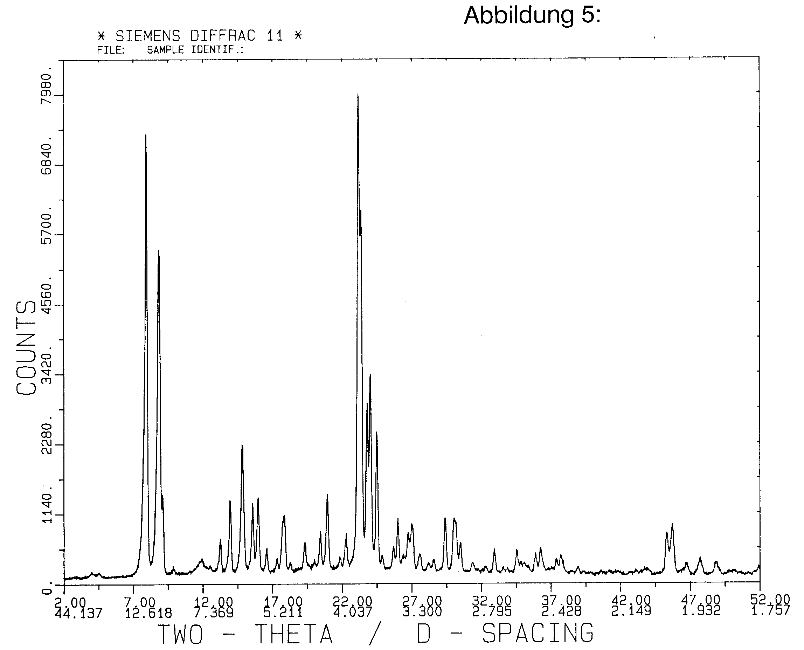

Die Kristalle hatten eine mittlere Größe von 50 µm. Die enge Größenverteilung kann anhand von Abbildung 4 beurteilt werden.

### Beispiel 3

Dieses Beispiel erläutert die Synthese von Borsilikatzeolith unter Verwendung einer Mischung aus Tetrapropylammmoniumhydroxid und Tetrapropylammoniumbromid bei zusätzlich verkürzter Synthesezeit.

In einem Stahlautoklaven mit Rührvorrichtung wurden 34,7 g Tetrapropylammoniumbromid, 468 g Kieselsol LUDOX® AS-40 (Du Pont), 524 g deionisiertes Wasser und 22,8 g Borsäuretrimethylester vorgelegt. Zu dieser Suspension wurden 423 g einer wässrigen Ammoniaklösung (25 Gew.-%) und 38,8 g einer wässrigen Tetrapropyl-ammoniumhydroxid-Lösung (20 Gew.-%) zugegeben.

Die entstandene Suspension wurde im verschlossenen Autoklaven unter Rühren (1006 U/min) auf 185°C hochgeheizt und im Laufe von 46 Stunden zur Kristallisation gebracht. Nach dem Abkühlen wurde der Feststoff abfiltriert, neutralgewaschen, bei 120°C getrocknet und abschließend bei 500°C temperaturbehandelt.

Die Ausbeute an Borsilikatzeolith bezogen auf eingesetztes SiO₂ betrug 96 %. Die chemische Analyse des Produktes ergab eine Zusammensetzung von 97,1 Gew.-% SiO₂, 1,69 Gew.-% B₂O₃ und Spuren von 130 ppm Natrium, sowie 1200 ppm Al₂O₃. Das Produkt war vollkristallin und zeigte das in Abbildung 5 angegebene Pulverdiffraktogramm.

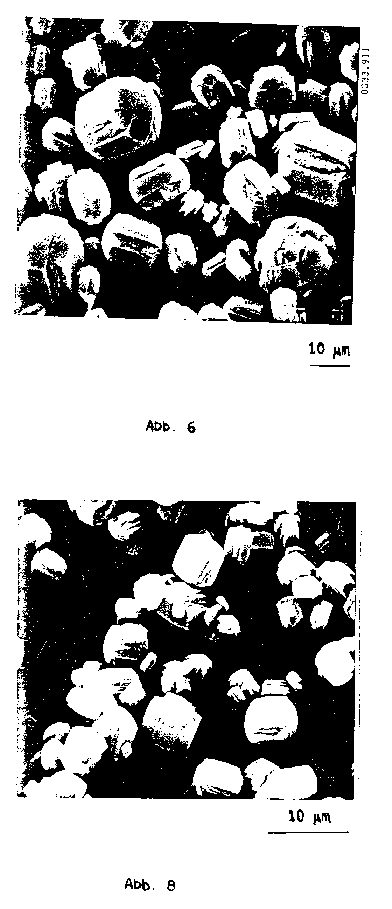

Die Kristalle hatten eine Größenverteilung von 5 bis 22 µm. Die Größenverwteilung kann anhand von Abbildung 6 beurteilt werden.

### Beispiel 4

Dieses Beispiel erläutert die Synthese von Borsilikatzeolith unter Verwendung einer Mischung aus Tetrapropylammmoniumhydroxid und Tetrapropylammoniumbromid bei kurzer Synthesezeit und im Vergleich zu Beispiel 3 erhöhtem Anteil an Tetrapropylammoniumhydroxid.

In einem Stahlautoklaven mit Rührvorrichtung wurden 47,2 g Tetrapropylammoniumbromid, 468 g Kieselsol LUDOX® AS-40 (Du Pont), 446 g deionisiertes Wasser und 22,7 g Borsäuretrimethylester vorgelegt. Zu dieser Suspension wurden 423 g einer wässrigen Ammoniaklösung (25 Gew.-%) und 97,3 g einer wässrigen Tetrapropylammoniumhydroxid-Lösung (20 Gew.-%) zugegeben.

Die entstandene Suspension wurde im verschlossenen Autoklaven unter Rühren (1006 U/min) auf 185°C hochgeheizt und im Laufe von 17 Stunden zur Kristallisation gebracht. Nach dem Abkühlen wurde der Feststoff abfiltriert, neutralgewaschen, bei 120°C getrocknet und abschließend bei 500°C temperaturbehandelt.

Die Ausbeute an Borsilikatzeolith bezogen auf eingesetztes SiO₂ betrug 90 %.

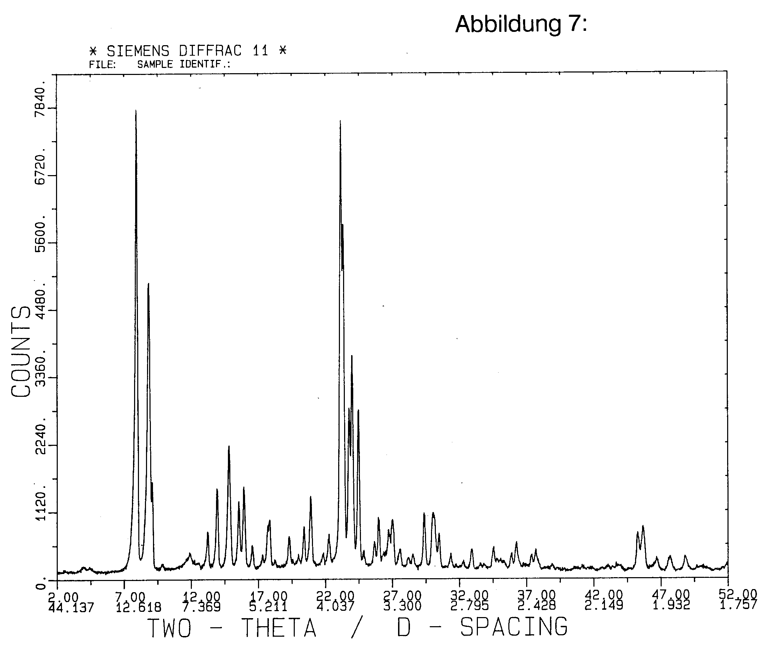

Die chemische Analyse des Produktes ergab eine Zusammensetzung von 94,7 Gew.-% SiO₂, 1,22 Gew.-% B₂O₃ und Spuren von 200 ppm Natrium, sowie 1200 ppm Al₂O₃. Das Produkt war vollkristallin und zeigte das in Abbildung 7 angegebene Pulverdiffraktogramm.

Die Kristalle hatten eine Größenverteilung von 2 bis 11 µm. Die Größenverteilung kann anhand von Abbildung 8 beurteilt werden.
- Abbildung 1:: Röntgenpulverdiffraktogramm der Probe aus Beispiel 1 (Cu-Ka-Strahlung; Siemens D500)
- Abbildung 2:: Rasterelektronenmikroskopische Aufnahme des Produktes aus Beispiel 1
- Abbildung 3:: Röntgenpulverdiffraktogramm der Probe aus Beispiel 2 (Cu-Ka-Strahlung; Siemens D500)
- Abbildung 4:: Rasterelektronenmikroskopische Aufnahme des Produktes aus Beispiel 2
- Abbildung 5:: Röntgenpulverdiffraktogramm der Probe aus Beispiel 3 (Cu-Ka-Strahlung; Siemens D500)
- Abbildung 6:: Rasterelektronenmikroskopische Aufnahme des Produktes aus Beispiel 3
- Abbildung 7:: Werte des Röntgenpulverdiffraktogramms der Probe aus Beispiel 1 (Cu-Ka-Strahlung; Siemens D500)
- Abbildung 8:: Rasterelektronenmikroskopische Aufnahme des Produktes aus Beispiel 4

## Patentansprüche

1. Verfahren zur Herstellung von im Wesentlichen alkalifreien Borsilikat-Kristallen mit Zeolithstruktur und einer über die Kristallit-Längsachse gemessenen Größe zwischen 2 und 150 µm, dadurch gekennzeichnet, daß man eine SiO₂-haltige Mischung aus Wasser, einer Tetraalkylammoniumverbindung, einer Borkomponenten und Ammoniak in Abwesenheit eines Metallhydroxids oder eines Metallsalzes bei einem molaren Verhältnis von Ammoniak/Tetraalkylammonium von 3:1 bis 150:1 hydrothermal umsetzt.

2. Verfahren nach Anspruch 1, dadurch gekennzeichnet, daß man die hydrothermale Kristallisation unter autogenem Druck bei einer Temperatur von 100°C bis 250°C durchführt.

3. Verfahren nach Anspruch 1, dadurch gekennzeichnet, daß man SiO₂ als wässrige kolloidale Lösung, in Form einer pyrogenen Kieselsäure, in Form einer hyrolysierbaren Tetraalkoxysilan-Verbindung und/oder in Form vorgefertigter SiO₂-Formkörper mit einem Verhältnis von SiO₂/H₂O von 0,07:1 bis 0,025:1 einsetzt.

4. Verfahren nach Anspruch 1, dadurch gekennzeichnet, daß man als Borkomponente Borsäure, Boroxid oder Borsäuretrimethylester in einem Verhältnis von SiO₂/B₂O₃ von 10:1 bis 1500:1 verwendet.

5. Verfahren nach Anspruch 1, dadurch gekennzeichnet, daß man als Tetraalkylammoniumverbindung gelöstes Tetra-n-propylammoniumsalz, gelöstes Tetra-n-propylammoniumhydroxid oder eine Mischung beider Komponenten verwendet, mit einem molaren Verhältnis von Tetraalkylammoniumverbindung/SiO₂ im Bereich 0,05:1 bis 0,15:1.

6. Aminfreie Borsilikat-Zeolithe, dadurch gekennzeichnet, daß sie nach den Ansprüchen 1 bis 5 hergestellt werden und zusätzlich einer Temperaturbehandlung bei 350°C bis 600°C unterzogen werden.

7. Borsilikate nach dem Verfahren in Anspruch 6, dadurch gekennzeichnet, daß sie ein mit Cu-Kalpha-Strahlung gemessenes Röntgenbeugungsdiagramm die folgenden Beugungslinien enthalten:
| Interplanarer Abstand (Angström) | Relative Intensität I/I° * 100 |
|---|---|
| 11.0 - 11.2 | 50 - 85 |
| 9.96 - 9.98 | 55 - 100 |
| 3.81 - 3.83 | 70 - 100 |
| 3.72 - 3.74 | 10 - 15 |
| 3.70 | 10 - 30 |
| 3.62 | 5 - 25 |
| 1.99 | 5 - 10 |
| 1.98 | 5 - 10 |

8. Verwendung der nach Anspruch 1 bis 7 hergestellten Borsilikat-Zeolithe als Katalysatoren zur katalytischen Umsetzung organischer Moleküle.

9. Verwendung der nach Anspruch 1 bis 7 hergestellten Borsilikat-Zeolithe als Adsorbentien zur Stofftrennung von organischen und anorganischen Molekülen.

10. Verwendung der nach Anspruch 1 bis 7 hergestellten Borsilikat-Zeolithe als binderfreie Katalysatoren, dadurch gekennzeichnet, daß damit katalytische Umsetzungen organischer Moleküle in Wirbelschichtverfahren vorgenommen werden.
